# EUROPEAN PATENT SPECIFICATION

(11) **EP 0 451 704 B1**
(45) Date of publication and mention of the grant of the patent: **18.09.1996**
(21) Application number: 91105339.5
(22) Date of filing: 04.04.1991
(51) Int. Cl.: H04N 5/45, H04N 7/087

(54) **Improved television signal receiver**
Verbesserter Fernsehsignalempfänger
Récepteur de signal de télévision amélioré

(30) Priority: 11.04.1990 IT 6726990
(43) Date of publication of application: 16.10.1991
(73) Proprietor: Società Italiana per lo Sviluppo dell'Elettronica S.I.SV.EL. S.p.A., I-10060 None (TO) (IT)
(72) Inventor: Dini, Roberto, Ing., Rivoli (TO) (IT)

(56) References cited:
- DE-A- 3 920 119
- US-A- 4 677 484
- PATENT ABSTRACTS OF JAPAN vol. 13, no. 522 (E-849)21 November 1989 & JP-A-1 213 082 (SONY) 25 August 1989
- PATENT ABSTRACTS OF JAPAN vol. 14, no. 518 (E-1001)14 November 1990 & JP-A-2 217 085 (MATSUSHITA ELECTRIC) 29 August 1990
- PATENT ABSTRACTS OF JAPAN vol. 14, no. 507 (E-998)6 November 1990 & JP-A-2 209 095 (MATSUSHITA ELECTRIC) 20 August 1990
- PATENT ABSTRACTS OF JAPAN vol. 14, no. 483 (E-993)22 October 1990 & JP-A-2 198 284 (FUJITSU GENERAL) 6 August 1990

## Description

The present invention relates to a television signal receiver, comprising receiving means to receive a first television channel and to obtain the relative video signal, destined to be visualized by means of a special image reproducer apparatus, and decoder means to obtain also the eventual televideo signal associated to it.

It is known television signal receivers that include means to receive a first television channel and to obtain the relative video signal, destined to be visualized by means of special image reproducer apparatus, and also comprising decoder means to obtain the eventual televideo signal (in English called teletext) associated to it.

Said televideo signal consists of a library of numbered pages that are transmitted in sequence during some lines of the field return in the television signal; said pages are opportunely encoded and for their reception a special decoder is used.

The decoder allows the visualization of one of the televideo pages, selected by the user between those transmitted, alternately to or superimposed on the normal television image.

Not all television channels transmit the televideo signal; for example in Italy only two of the three "RAI" channels (RAI 1 and RAI 2) and some private TV channels, transmit a televideo signal. We may also suppose that if some other receivable television channel (for example in Italy, "Canale 5" or "Rete 4") decides to transmit televideo signals, the information transmitted would be in general different by those contained in RAI televideo.

The invention is based on the recognition of the fact that it can be useful in certain cases to simultaneously visualize on the screen the television image of a certain channel and a televideo page associated to an other channel.

The aim of the present invention is therefore to conceive a television signal receiver more flexible than those known, able to satisfy the needs of the user not satisfiable with receivers of the known type.

To achieve such aims, the present invention has for its object a television signal receiver as defined in claim 1.

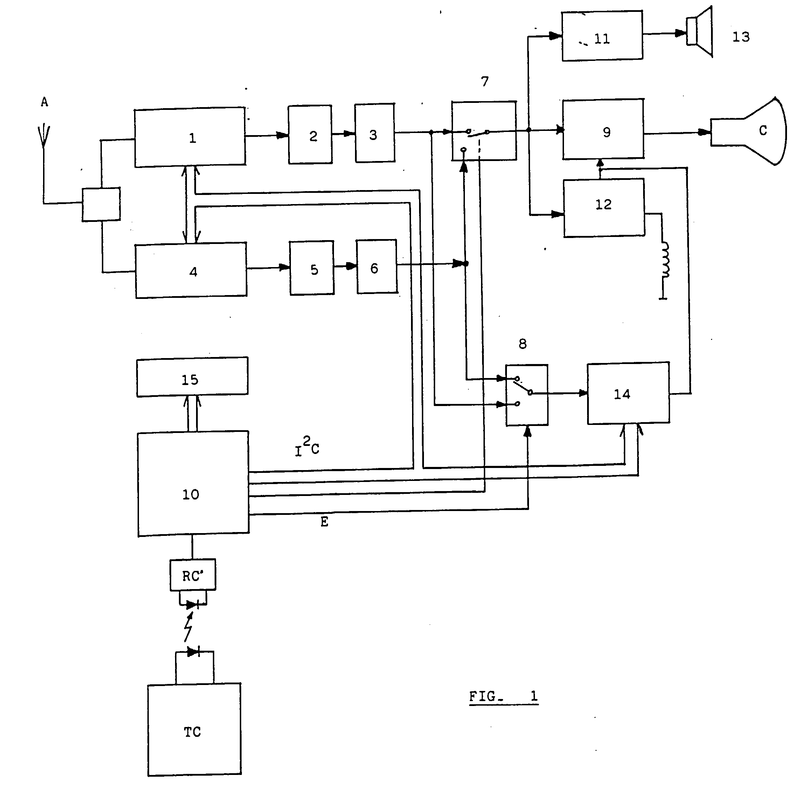

Further scopes and advantages of the present invention will be more clear by the following description and by the enclosed drawings, supplied as a non-limiting example, in which the figure schematically represents the diagram of a television receiver according to invention.

In the figure the reference letter "A" indicates the aerial, connected to the receiver to pickup the available television signals. Said aerial is connected to two conventional tuners respectively indicated with the reference numbers 1 and 4; to said tuners follow two signal amplifiers operating on intermediate frequency, also conventional, indicated with the numbers 2 and 5 respectively.

The amplifier 2 is connected at its out-put to a video detector 3; the amplifier 5, which in its turn, is connected in exit to a video detector 6 and with an amplifier chain and audio signal detector 11.

The two video detectors 3 and 6 are both connected to a signal manipulator circuit 7 comprising a memory, the so called memory frame, even if at low resolution, in turn connected to a processor 10. The circuit 7 is of a known type (for example the part that acts as a signal commutator, can be realized using a TEA integrated circuit 2014) and it is able to combine and to memorize the relative video signals with one or more images and, under the control of the processor 10, comprising a microprocessor circuit of a known type, thus it is possible to send to the successive video amplifier circuit 9, a combined image (commonly said P.I.P. Or Picture in Picture) containing for sample a main image (correspondent to the video signal coming from the chain 4, 5, 6) and a second different image of a reduced size situated in one angle of the first (correspondent to the video signal coming from chain 1, 2, 3).

Such combined image is then visualized by the television image reproducer indicated with the letter C, represented for example by a normal colour picture-tube, or other image display of a known type.

Also provided, though not represented in the figure, for simplicity, known channel selection means, associated both to the main chain ( 4, 5, 6 ) and to the secondary (1, 2, 3), preferably of the type with frequency synthesis with two P.L.L. ( for example of the type TSA 5510 from Philips Company), respectively inserted in the tuners 1 and 4 and commanded across the I2C bus of the microprocessor 10. The audio signal associated to the main television channel and coming from the circuit 11 reaches a sound reproduction device, referred to by the number 13, that is a conventional sound diffusion system comprising one or more loudspeakers.

The block 12 represents the ensemble of the synchronism circuits and deflection of the receiver.

According to the present invention a commutation circuit 8 is also provided, that receives from the circuits 3 and 6 the two video signals, correspondent to the two received television channels; it also receives a control signal E, coming from the microprocessor 10; in exit the circuit 8 is connected to a televideo decoder 14, also connected to the bus of the microprocessor 10, whose exit signal in turn reaches the video amplifier 9.

Depending on the signal received, the circuit 8 provides to commute the received televideo signals, sending to the decoder, and so to the picture-tube C, alternately the signal coming from main channel (4, 5, 6) or the signal coming from secondary channel (1, 2, 3).

More precisely the commutation happens only during the signals acquirement phase, while during the phase of writing the synchronism signals of the main signal are always utilised, in order that the televideo image is synchronized with it however.

The first situation (televideo acquired by the main channel) permits the viewing, as in a normal receiver equipped with televideo function, the television image of the main channel and, alternately or superimposed, the relative televideo pages; the second situation (televideo acquired by the secondary channel) permits the viewing of the television image of the main channel and, alternately or superimposed, the televideo pages associated to the secondary channel. The reproduced audio will always be that of the main channel. The microprocessor receives the suitabable command signals from the user by means of a telecontrol device of the known type (TC/RC); between such command signals there will also be one to decide whether the first or the second televideo signal is to be sent to the televideo decoder 14; such a particular signal will be for example obtained by means of a dedicated button in said telecontrol.

Naturally to manage the video reproduction an analogous command system of the processor 7 will have to be provided; that is to decide whether to visualize or not the secondary video signal (as in any normal receiver of the type P.I.P.).

An auxiliary visualization system is also provided, indicated with the reference number 15, that serves to visualize the relative information of the televideo (number of the page required, number of the page received, etc.), particularly useful during the acquirement phase, in the case of the superimposing of a televideo signal taken from a secondary channel on the television image of the main channel. In fact, in such a case and during the acquirement, such information cannot be visualized in the normal mode, for the incompatibility of the synchronism signals pertinent to the two different television channels.

Such auxiliary visualization system can consist of a separate conventional display, or can also be obtained with the known O.S.D. method ( On Screen Display ) on the main screen.

The characteristics of the described television signal receiver are clear from the above description and enclosed drawing.

From the above description the advantages of the television signal receiver object of the present invention become evident.

In particular they consist in the fact that it is possible to visualise or to normally listen to a television programme, while simultaneously a superimposed televideo page transmitted associated to a second television channel can be visualised.

It is clear that the described television signal receiver is more flexible than those now known; it is also clear that numerous variations can be made by the skilled man, to the television signal receiver described as an example, without departing from the novelty principles inherent to the invention.

## Claims

1. Television signal receiver, comprising:
- first receiving means (4, 5, 6) to receive a first television channel and to obtain the relative video signal thereof;
- second receiving means (1, 2, 3) to receive a second television channel and to obtain the relative video signal thereof;
- a television image reproducer (C);
- first switching means (7) for selectively visualising onto said television image reproducer (C) the video signal coming from either said first (4, 5, 6) or said second receiving means (1, 2, 3);
- decoder means (14) for obtaining from a video signal the eventual teletext signal associated to it;
characterized in that the television signal receiver includes also second switching means (8) for selectively applying to said decoder means (14) the video signal coming from either said first (4, 5, 6) or said second receiving means (1, 2, 3) according to a command signal (E) which is applied to said second switching means.

2. A television signal receiver, according to claim 1, characterized in that said command signal (E) is generated by means of a button for the user of the receiver.

3. A television signal receiver, according to claim 1, characterized in that said command signal (E) is generated from a remote control device for the user of the receiver.

4. A television signal receiver, according to claim 1, characterized in that said second switching means (8) is commanded by a processor (10).

5. A television signal receiver, according to claim 1, characterized in that the second switching means (8) sends to said decoder means (14), during the period in which the latter acquires the data, the video signals from which the teletext signals to be shown on the image reproducer (C) are extracted, while, during the period in which said decoder (4) is in writing, said second switching means (8) sends the video signal relative to said first television channel.

6. A television signal receiver, according to claim 5, characterized in that the synchronism signals for the deflection are taken, downstream to the first switching means (7), from the main video signal.

7. A television signal receiver, according to claim 1, characterized in that it includes an auxiliary visualisation device (15) to visualise the data relative to the teletext pages, particularly in the case of simultaneously receiving television images coming from the first channel and of teletext images taken from the second channel.

8. A television signal receiver, according to claim 7, characterized in that the visualisation of the data relative to the teletext images taken from the second channel is obtained by the OSD method (On Screen Display).

## Patentansprüche

1. Fernsehsignalempfänger, mit:
- einer ersten Empfangseinrichtung (4, 5, 6) zum Empfangen eines ersten Fernsehkanals und zum Erhalten von dessen zugehörigem Videosignal;
- einer zweiten Empfangseinrichtung (1, 2, 3) zum Empfangen eines zweiten Fernsehkanals und zum Erhalten von dessen zugehörigem Videosignal;
- einer Fernsehbildwiedergabevorrichtung (C);
- einer ersten Umschalteinrichtung (7) um selektiven Darstellen des entweder von der ersten (4, 5, 6) oder der zweiten Empfangseinrichtung (1, 2, 3) kommenden Videosignals auf der Fernsehbildwiedergabevorrichtung (C);
- einer Dekodiereinrichtung (14), um aus einem Videosignal das diesem möglicherweise zugeordnete Videotextsignal zu erhalten;
dadurch gekennzeichnet, daß der Fernsehsignalempfänger ebenfalls eine zweite Umschalteinrichtung (8) beinhaltet, um das entweder von der ersten (4, 5, 6) oder zweiten Empfangseinrichtung (1, 2, 3) kommende Videosignal entsprechend einem Befehlssignal (E), welches an die zweite Umschalteinrichtung angelegt ist, selektiv an die Dekodiereinrichtung (14) anzulegen.

2. Fernsehsignalempfänger nach Anspruch 1,
dadurch gekennzeichnet, daß das Befehlssignal (E) durch einen Knopf für den Bediener des Empfängers erzeugt wird.

3. Fernsehsignalempfänger nach Anspruch 1,
dadurch gekennzeichnet, daß das Befehlssignal (E) von einer Fernsteuerung für den Bediener des Empfängers erzeugt wird.

4. Fernsehsignalempfänger nach Anspruch 1,
dadurch gekennzeichnet, daß die zweite Umschalteinrichtung (8) durch einen Prozessor (10) gesteuert wird.

5. Fernsehsignalempfänger nach Anspruch 1,
dadurch gekennzeichnet, daß die zweite Umschalteinrichtung (8) der Dekodiereinrichtung (14) während der Periode, in welcher letztere die Daten aufnimmt, die Videosignale sendet, aus welchen die auf der Bildwiedergabevorrichtung (C) anzuzeigenden Videotextsignale extrahiert werden, während, während der Periode, in welcher der Dekodierer (4) schreibt, die zweite Umschalteinrichtung (8) das dem ersten Fernsehkanal zugehörige Videosignal sendet.

6. Fernsehsignalempfänger nach Anspruch 5,
dadurch gekennzeichnet, daß die Synchronisationssignale für die Ablenkung hinter der ersten Umschalteinrichtung (7) von dem Hauptvideosignal abgegriffen werden.

7. Fernsehsignalempfänger nach Anspruch 1,
dadurch gekennzeichnet, daß er eine Hilfsdarstellungsvorrichtung (15) zum teilweisen Darstellen der zu den Videotextseiten gehörenden Daten in dem Fall des gleichzeitigen Empfangs von Fernsehbildern von dem ersten Kanal und Videotextbildern von dem zweiten Kanal enthält.

8. Fernsehsignalempfänger nach Anspruch 7,
dadurch gekennzeichnet, daß die Darstellung der zu den von dem zweiten Kanal entnommenen Videotextbildern gehörenden Daten durch das OSD-Verfahren (On Screen Display) verwirklicht wird.

## Revendications

1. Récepteur de signal de télévision, comprenant:
- des premiers moyens de réception (4, 5, 6) pour recevoir un premier canal de télévision et pour obtenir le signal vidéo relatif à ce canal;
- des seconds moyens de réception (1, 2, 3) pour recevoir un second canal de télévision et pour obtenir le signal vidéo relatif à ce second canal;
- un organe de reproduction d'images de télévision ou téléviseur (C);
- des premiers moyens de commutation (7) pour visualiser sélectivement sur ledit organe de reproduction d'images de télévision (C) le signal vidéo en provenance soit desdits premiers (4, 5, 6) soit desdits seconds (1, 2, 3) moyens de réception;
- des moyens de décodage (14) pour obtenir à partir d'un signal vidéo le signal de télétex éventuel qui lui est associé;
caractérisé en ce que le récepteur de signal de télévision comporte également des seconds moyens de commutation (8) pour appliquer sélectivement auxdits moyens de décodage (14) le signal vidéo en provenance soit desdits premiers (4, 5, 6) soit desdits seconds (1, 2, 3) moyens de réception en correspondance à un signal de commande (E) qui est appliqué auxdits seconds moyens de commutation.

2. Un récepteur de signal de télévision, selon la revendication 1, caractérisé en ce que ledit signal de commande (E) est émis par l'intermédiaire d'un bouton par l'utilisateur du récepteur.

3. Un récepteur de signal de télévision, selon la revendication 1, caractérisé en ce que ledit signal de commande (E) est émis depuis un dispositif de télécommande par l'utilisateur du récepteur.

4. Un récepteur de signal de télévision, selon la revendication 1, caractérisé en ce que lesdits seconds moyens de commutation (8) sont commandés par un processeur (10).

5. Un récepteur de signal de télévision, selon la revendication 1, caractérisé en ce que lesdits seconds moyens de commutation (8) adressent auxdits moyens de décodeur (14), au cours de la période pendant laquelle ce dernier acquiert les données, les signaux vidéo à partir desquels les signaux de télétex à représenter sur l'organe de reproduction d'image (C) sont extraits, tandis que, pendant la période au cours de laquelle ledit décodeur (4) est en train d'écrire, lesdits seconds moyens de commutation (8) adressent le signal vidéo relatif audit premier canal de télévision.

6. Un récepteur de signal de télévision, selon la revendication 5, caractérisé en ce que les signaux de synchronisation pour la déviation, sont pris à l'aval des premiers moyens de commutation (7), sur le signal vidéo principal.

7. Un récepteur de signal de télévision, selon la revendication 1, caractérisé en ce qu'il comporte un dispositif de visualisation auxiliaire (15) pour visualiser les données relatives aux pages de télétex, en particulier dans le cas de la réception simultanée d'images de télévision en provenance du premier canal et d'images de télétex prises sur le second canal.

8. Un récepteur de signal de télévision, selon la revendication 7, caractérisé en ce que la visualisation des données relatives aux images de télétex prises sur le second canal, est obtenue par le procédé OSD (affichage sur écran).
